# EUROPEAN PATENT APPLICATION

(11) **EP 4 321 661 A1**
(43) Date of publication of application: **14.02.2024**
(21) Application number: 23191120.7
(22) Date of filing: 11.08.2023
(51) Int. Cl.: D01F 1/02, D01F 6/14, D01D 5/08

(54) **METHOD OF MANUFACTURE OF POLYVINYL ALCOHOL FIBRES, POLYVINYL ALCOHOL FIBRES AND FIBROUS PRODUCTS COMPRISING SUCH FIBRES**

(30) Priority: 13.08.2022 EP 22190331
(71) Applicant: Aquapak IP Limited, Birmingham B31 5HE (GB)
(72) Inventor: WILLIAMS, John, Chirbury, SY15 6UD (GB); GRIFFITHS, Sian, Conwy, LL28 5LU (GB); ASHWORTH, Robert, Conwy, LL28 5YX (GB); EATON, Jack, Leeds, LS8 2AX (GB)
(74) Representative: Hepworth Browne

(57) **Abstract**

A method of manufacture of polyvinyl alcohol fibres comprising the steps of: providing a polyvinyl alcohol composition comprising:
homopolymeric polyvinyl alcohol having a degree of hydrolysis of 88% to 98% or greater and a weight average molecular weight in the range from 14,000 to 22,000;
a plasticiser selected from the group consisting of: diglycerol, triglycerol, fructose, ribose, xylose, D-mannitol, triacetin, pentaerythritol, dipentaerythritol, methyl pentanediol, 1,2-propanediol, 1,4-butanediol, 2-hydroxy-1,3-propanediol, 3-methyl-1,3-butanediol, 3,3-dimethyl-1,2-butanediol, polyethylene glycol 300, polyethylene glycol 400, alkoxylated polyethylene glycol, caprolactam, tricyclic trimethylolpropane formal, rosin esters, erucamide, and mixtures thereof; and
an optional stabilizer selected from the group consisting of: sodium stearate, potassium oleate, sodium benzoate, calcium stearate, stearic acid, dimethyl, propionic acid and mixtures thereof;
melting the composition at a temperature from 200°C to 230°C to form a molten polymer;
extruding the melted composition to form an extrudate;
forming the extrudate into molten fibres; and
allowing the molten fibres to solidify to form solid fibres.

## Description

This invention relates to polyvinyl alcohol fibres, methods of making polyvinyl alcohol fibres and products manufactured from polyvinyl alcohol fibres. The invention relates particularly but not exclusively to products comprising non-woven polyvinyl alcohol fibres, methods of making non-woven polyvinyl alcohol fibres and products incorporating such fibres.

Polyvinyl alcohol has many advantages in comparison to polymers which are traditionally used for manufacture of non-woven fibre products. Polyvinyl alcohol is soluble in water, particularly when heated, facilitating reclamation, recycling and environmental degradation.

Polyvinyl alcohol is manufactured by hydrolysis of homopolymer or co-polymers of polyvinyl acetate. Polyvinyl alcohol manufactured by partial or complete hydrolysis of homopolymeric polyvinyl acetate is referred to as homopolymeric polyvinyl alcohol. The degree of hydrolysis determines the properties of the resultant polymer. Co-polymeric polyvinyl alcohols or homopolymeric polyvinyl alcohol with a low degree (LD) of hydrolysis are easy to process but have inferior mechanical and chemical properties. Homopolymeric polyvinyl alcohol with a high degree (HD) of hydrolysis, for example 85% or greater, has superior properties but is not processable without degradation under conditions using apparatus employed for manufacture of polyolefin non-woven fibres.

Polyvinyl alcohol is soluble in water and fibres have traditionally been made by solution spinning methods using polyvinyl alcohol with a low degree (LD) of hydrolysis.

In order to enhance water resistance, thermal e.g. hot drawing and chemical e.g. acetylation steps have been required.

WO2017/046361 discloses a method for manufacture of processable polyvinyl alcohol having a degree of hydrolysis of 98% or greater.

WO2022/008521 discloses a method for manufacture of processable polyvinyl alcohol having a degree of hydrolysis in the range of 93% to 98% or more.

WO2022/008516 discloses a method for manufacture of plasticised polyvinyl alcohol having a degree of hydrolysis of 93% to 98% or more.

According to a first aspect of the present invention, a method of manufacture of polyvinyl alcohol fibres comprises the steps of:
providing a polyvinyl alcohol composition comprising:
homopolymeric polyvinyl alcohol having a degree of hydrolysis of 88% to 98% or greater and a weight average molecular weight in the range from 14,000 to 35,000;
a plasticiser selected from the group consisting of: diglycerol, triglycerol, fructose, ribose, xylose, D-mannitol, triacetin, pentaerythritol, dipentaerythritol, methyl pentanediol, 1,2-propanediol, 1,4-butanediol, 2-hydroxy-1,3-propanediol, 3-methyl-1,3-butanediol, 3,3-dimethyl-1,2-butanediol, polyethylene glycol 300, polyethylene glycol 400, alkoxylated polyethylene glycol, caprolactam, tricyclic trimethylolpropane formal, rosin esters, erucamide, and mixtures thereof; and
an optional stabilizer selected from the group consisting of: sodium stearate, potassium oleate, sodium benzoate, calcium stearate, stearic acid, dimethyl pentane diol, propionic acid and mixtures thereof;
melting the composition at a temperature from 190°C to 250°C to form a molten polymer;
extruding the melted composition to form an extrudate;
forming the extrudate into molten fibres; and
allowing the molten fibres to solidify to form solid fibres.

The molten fibres may be drawn to form individual solid fibres or a bundle of solid fibres.

Alternatively, the method may comprise the steps of:
forming the molten fibres into a molten or partially solidified non-woven fibre product; and
allowing the product to solidify to form a solid non-woven fibre product.

In embodiments, the degree of hydrolysis may be in the range from 90 to 95%, preferably 93 to 95%.

The molecular weight of the homopolymeric polyvinyl alcohol may be in the range from 14,000 to 35,000.

Molecular weights in this specification are weight average molecular weights and are measured using conventional liquid chromatographic techniques.

The composition may be melted at a temperature from 220°C to 240°C.

The polyvinyl alcohol composition may have a melt flow index (MFI) of 30 to 80g/10min, for example 50 to 75g/10min, for example 70 to 75g/10min. Melt flow indices referred to in this specification are determined at 230°C using a weight of 10kg by conventional techniques.

The polyvinyl alcohol composition is preferably stable at the temperature at which it is melted and extruded. Polyvinyl alcohol, not containing a plasticiser and stabiliser as disclosed herein, particularly the homopolymer having a high degree of hydrolysis, may be liable to decompose at the temperatures required for melting and extrusion processing.

Advantageous polyvinyl alcohol fibres of this invention are capable of being processed on a commercial scale, using conventional fibre processing apparatus.

Polyvinyl alcohol according to this invention can be processed in to filaments or fibres. These may be converted by crimping and cutting into stable fibres suitable for carding, wet laying and air laying to form a range of non-woven products.

It is an advantage that polyvinyl alcohol fibres of this invention are capable of being processed on a commercial scale, for example using apparatus running at 4,500 m.min⁻¹.

The stabilised polyvinyl alcohol polymers used in this invention may be manufactured in accordance with WO2022/008516 and WO2022/008521, the disclosures of which are incorporated into this specification by reference for all purposes.

The polyvinyl alcohol composition may be made by a method comprising the steps of:
introducing into a mixing reactor a polyvinyl alcohol polymer comprising homopolymeric polyvinyl alcohol or a blend thereof having a degree of hydrolysis in the range of 88 wt% to 98 wt% or greater;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid, a plasticiser and an optional reactive stabiliser to the chamber to form a reaction mixture;
wherein the plasticiser is selected from the group disclosed above;
wherein the reactive stabiliser when present is selected from the group consisting of:
   sodium stearate, potassium oleate, sodium benzoate, calcium stearate, stearic acid, dimethyl propionic acid, and mixtures thereof;
   wherein the blending chamber comprises a plurality of heated regions arranged so that the mixture is subjected to a temperature profile whereby the temperature increases from the inlet to the outlet;
   a secondary outlet located between the reaction zone and primary outlet arranged to allow removal of processing aid from the chamber;
   reacting the processing agent, plasticiser and polymer in the reaction zone to form plasticised polymer; and
   allowing the plasticised polymer to pass from the primary outlet.

Use of a reactive mixing apparatus, typically an extruder in accordance with this invention allows the processing aid and plasticiser to be reacted with the polyvinyl alcohol or blend thereof, without decomposition of the polymer, followed by removal of all or most of the processing aid from the secondary outlet to give plasticised polyvinyl alcohol or a blend thereof.

Use of a reactive stabiliser may result in an advantageous reduction in the extent of degradation during melt processing. This allows homopolymeric polyvinyl alcohol having a high degree of hydrolysis, for example 88 wt% or higher to be processed to form fibres or pellets from which fibres may be formed by extrusion.

The reactive stabiliser may be used in an amount of about 0.1 wt% to about 5 wt%, for example about 0.1 wt% to about 3 wt%, for example 0.1 wt% to about 1.5 wt%, for example from about 0.2 wt% to about 0.5 wt%, for example about 0.25 wt%.

The reactive stabilisers of this invention may decrease the extent of degradation of the polymer during processing. Homopolymeric polyvinyl alcohol has been difficult to process due to degradation at the high temperatures required. The liability of degradation has led to use of polyvinyl alcohol co-polymers with a consequent loss of engineering properties. This can be seen by UV spectral analysis of the amount of conjugation present in the polymer. Sodium benzoate has been found to be particularly effective.

Use of homopolymeric polyvinyl alcohol is particularly advantageous. Homopolymeric polyvinyl alcohol is manufactured by hydrolysis of homopolymeric polyvinyl acetate, the degree of hydrolysis being 90wt% or more in embodiments of this invention. Polyvinyl alcohol co-polymers made by hydrolysis of polyvinyl acetate copolymers have inferior properties compared to homopolymeric polyvinyl alcohol. Homopolymeric polyvinyl alcohol may exhibit advantageous properties.

Homopolymeric polyvinyl alcohol polymer fibres of this invention may have high tensile strength and flexibility in comparison to previously available polyvinyl alcohol fibres.

The polyvinyl alcohol may be manufactured by hydrolysis of homopolymeric polyvinyl acetate, wherein the extent of hydrolysis is in the range from 88 wt% up to 98 wt%, for example 90 wt% to 95 wt%.

A blend of two or more polyvinyl alcohol polymers may be employed, for example a blend of two polyvinyl alcohol polymers with a relatively high molecular weight and a relatively low molecular weight respectively.

A blend of polyvinyl alcohols with the same molecular weight and different degrees of hydrolysis can be combined. Blending different polyvinyl alcohol grades together enables the properties of the resultant polymer to be enhanced, for example melt strength.

For fibre production a blend of two polyvinyl alcohol polymers with a molecular weight in the range 22,000 to 38,000, a first polymer having a low degree of hydrolysis and a second polymer having a high degree of hydrolysis may be blended in a ratio of 40:60 to 60:40, for example about 50:50 by weight.

The blends of different molecular weight polymers employed are selected in accordance with the physical properties required in the finished product. These may require different molecular weight materials being used. Use of more than two different molecular weight polymers may be advantageous. The use of a single molecular weight polymer is not precluded.

Use of a blend may allow control of the viscosity of the polymer. Selection of a stabiliser in accordance with the present invention allows use of blends of a desired viscosity without a loss of other properties. Alternatively, use of a blend may permit use of polyvinyl alcohol with one or more stabilisers while maintaining viscosity or other properties to permit manufacture of pellets or films.

The processing aid is preferably water. Alternatively, the processing aid may comprise a mixture of water and one or more hydroxyl compound with a boiling point less than the boiling point or melting point of the plasticiser. Use of water is preferred for cost and environmental reasons.

Two or more plasticisers may be employed.

When a mixture of plasticisers is employed, a binary mixture may be preferred.

In an embodiment, the plasticisers may be selected from the group consisting of: diglycerol, triglycerol, xylose, D-mannitol, triacetin, dipentaerythritol, 1,4-butanediol, 3,3-dimethyl-1,2-butanediol, and caprolactam.

The total amount of plasticiser in the formulation may be from about 15 wt% to about 30 wt%.

Polymer compositions and fibres of the present invention may not include any or any substantial amount of a water soluble salt, oil, wax or ethylene homopolymer or copolymer.

The method of this invention provides many advantages. The method allows formation of thermally processable polyvinyl alcohol which can be used to create economical fibres that are highly functional while eliminating plastic pollution. Polyvinyl alcohol is water-soluble, non-toxic to the environment and inherently biodegradable. Hydrophilic polymers, for example, polyvinyl alcohol degrade environmentally faster than hydrophobic polymers and do not show bioaccumulation. Thermoplastic polyvinyl alcohol can be mechanically recycled into pellets for repeated use.

The fibres of this invention may exhibit advantageous chemical resistance, particularly to alcohols, acids and alkalis.

Fibres of this invention may have an advantageous smaller diameter, than previously available polyvinyl alcohol fibres. Fibres having a smaller diameter have a greater surface area which may be advantageous for air filtration, for example in face masks. Finer fibres may also be softer in texture. Furthermore, finer fibres may also have an increased rate of biodegradation after use.

According to a second aspect of the present invention there is provided thermally processable polyvinyl alcohol fibre made in accordance with the first aspect of the present invention.

According to a third aspect of the present invention, there is provided a thermally processable non-woven fibre product comprising fibres made in accordance with the method of the first aspect of the present invention.

Thermally processable polyvinyl alcohol of this invention may be formed into fibres by various methods.

Filament extrusion may be used to form monofilament and multifilament fibres.

Spun bonding may be used to form non-woven fabrics.

Meltblowing may be used to form non-woven fabrics.

A non-woven product is defined by ISO9092 as an engineered fibrous assembly, primarily planar, which has been given a designed level of structural integrity by physical and/or chemical means, excluding weaving, knitting or paper making.

Homopolymeric polyvinyl alcohol fibres of this invention provide many advantages in comparison to previously available polyvinyl alcohol containing fibres. The fibres of this invention and products made from these fibres exhibit improved tensile strength, barrier properties, water solubility and biodegradability. Homopolymeric polyvinyl alcohol fibres may unexpectedly exhibit all of these properties. In comparison, copolymers have only been able to compromise and provide one or more of these properties at the expense of other properties. The fibres and products of the present invention have a desirable monomaterial structure which does not suffer from this disadvantage.

Non-woven products comprising polyvinyl alcohol fibres of this invention in combination with fibres of cellulose pulp, viscose and mixtures thereof have excellent flushability, for example in accordance with UK Water Fine to Flush WIZ 4-02-06. Wet wipes manufactured from non-woven fibres of this invention exhibit excellent dry and wet tensile strength.

Fibres of this invention may be made by extrusion of filaments of the melted polyvinyl alcohol polymer through a spinneret having small holes, for example 0.25mm in diameter. The extruded filaments may be drawn using heated rollers which may be referred to as godet rollers, rotating at different speeds to form a multi filament tow. The multifilament tow may be crimped by heating followed by shaping with toothed or fluted rollers and cutting with rotary blades to provide fibres of desired length. Use of specific fibre lengths may confer compatibility with various non-woven fibre processing techniques.

The following extrusion and drawing conditions may be employed.

An extrusion temperature of 200°C to 247°C may be employed, preferably 210°C to 220°C. Within these ranges, higher extrusion temperatures may be used to process polymers having a higher degree of hydrolysis.

The number of filaments in a fibre may be in the range 24 to 72. Use of a fibre or yarn comprising a bundle of a larger number of filaments may be advantageous to increase the overall diameter and to improve cohesion of the bundle of filaments during drawing and may also allow use of a higher drawing ratio. The larger number of filaments allows the tension applied during the drawing process to be distributed between the larger number of filaments.

The rotational speed of the first godet roller (godet 1) may be 200 to 400mpm (m/min). Use of a godet 1 speed greater than 400 mpm may increase the frequency of melt breaks. An optimum speed for godet 1 may be about 391mpm. The rotational speed of the godet 5 roller may be 350 to 1665 mpm. The rotational speeds of godets 2 to 4 may have intermediate values. A higher drawing ratio may be achieved using 72 filaments resulting a finer fibre of 3 dtex or greater at a godet 5 speed of 500 rpm or higher.

A spin finish may be applied to the filaments before the fibre passes to the godet rollers. A non-aqueous spin finish oil may be employed; for example, Tallopol DT, Tallopon Biocone or Vystat. A spin finish content of 0.4 wt% to 4.7 wt% may be used at a spin finish pump speed of 4 to 15 rpm.

A minimum of 0.4 wt% of spin finish may be employed to provide sufficient cohesion between the filaments for drawing and winding.

Fibres in accordance with this invention may be laid to form non-woven layers or webs by various methods, including: carding, air laying or wet laying. The fibres in a web may be bonded by a method selected from: hydroentanglement, needle punching, chemical or adhesive bonding and thermal bonding.

In a carding method, fibre bundles are separated and individualised using carding wires to produce an orientated fibre network structure. Crimped polyvinyl alcohol fibres may be employed.

Use of the thermally processable fibres of this invention allows manufacture on a commercial scale of fibrous products consisting of or comprising homopolymeric polyvinyl alcohol.

A blend of polyvinyl alcohol (PVOH) fibres with sustainable fibres may be employed, for example the sustainable fibres may be biopolymers, for example lyocell, polylactic acid (PLA) and mixtures thereof. A wide range of fibres may be employed.

A blending ratio of PVOH:lyocell of 70:30 wt% to 90: 10 wt%, preferably 80:20 wt% or a ratio of PVOH:PLA of 70:30 wt% to 90:10 wt%, preferably 80:20 wt% may be employed.

The carded web may have an areal density of 60 to 40 gm⁻², for example about 50 gm⁻².

In an embodiment, 100% PVOH and 80:20 wt% PVOH:lyocell carded webs may be needlepunched at 9mm penetration depth, hydroentangled at 30 bar or chemically bonded using, for example, ethylene vinyl acetate (EVA) binder.

Through air bonding in which hot air is forced through the web, for example by convection, may be employed to melt an adhesive to avoid producing excessive compression.

In an embodiment, 80:20 wt% PVOH: PLA carded webs may be through air bonded at 120°C for 2 minutes.

Air laying methods may be employed, in which a turbulent air stream is used to produce an isotropic fibre network.

In an embodiment, crimped polyvinyl alcohol fibres may be cut to a length of 5mm and blended with pulp fibres (approximately 2mm), for example Georgia Pacific (GP) cellulose.

Ratios of polyvinyl alcohol: cellulose of 80:20 wt% to 20:80 wt% for example about 50:50 wt% may be employed.

The areal density may be about 50 gm⁻², dependent on the application, for example single or multiple use applications.

The airlaid webs may be hydroentangled and then dried.

Fibres of this invention provide the advantage that polyvinyl alcohol fibre-containing webs may be converted into hydroentangled airlaid non-woven fabrics having a high strength. The fibres, particularly comprising warm water soluble polyvinyl alcohol, were found to partially dissolve during the hydroentanglement process resulting in strong but stiff fabrics.

A wetlaying process may be used to form non-woven fabrics with hot water-soluble polyvinyl alcohol fibres. In this process the polyvinyl alcohol fibres are dispersed in water and transferred onto a foraminous conveyor through which the water is removed to deposit a web of fibres.

In embodiments, the fibres may be cut to a suitable length, for example 5mm and blended with pulp fibres, for example Sodra Black, at ratios of polyvinyl alcohol:pulp of 50:50 wt% to 20:80 wt%.

Lyocell fibres (1.4 dtex/5mm) may be blended at ratios of polyvinyl alcohol:pulp of 50:50 wt% to 20:80 wt%.

The areal density may be about 60gm⁻². This density may be employed for manufacture of flushable wipes.

The wetlaid webs may be hydroentangled and dried at 100°C for 30 seconds.

The tensile strength may be compared with commercial products. A blend of polyvinyl alcohol:pulp:lyocell in a ratio of 40:40:20 wt% may exhibit a relatively high tensile strength of 11 to 13N, typically about 12N.

Hydroentangled wetlaid fabrics of this invention incorporating pulp have relatively good tensile strength. Pulp fibres typically have high liquid absorption capacity. After hydroentanglement, the wetlaid web remains saturated resulting in partial dissolution of the polyvinyl alcohol fibres during the drying stage. The polyvinyl alcohol fibres act as a binder alongside formed hydrogen bonds between the pulp fibres.

The increase in specific energy during hydroentanglement may increase the dry tensile strength of the fabrics incorporating lyocell fibres.

Percentages and other quantities referred to in this specification are by weight unless stated otherwise and are selected from any ranges quoted to total 100%.

The invention is further described by means of example but not in any limitative sense with reference to the accompanying drawing, of which:

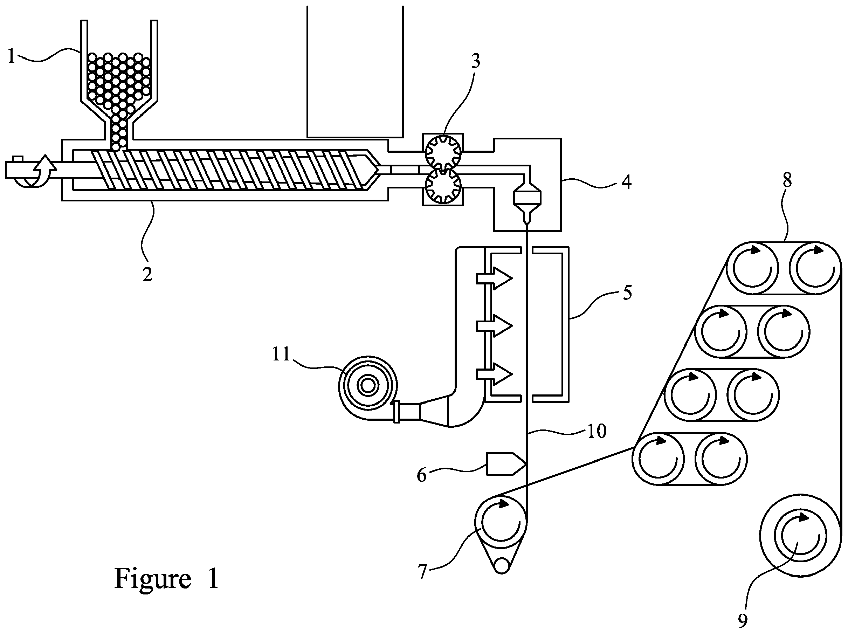

Figure 1 is a diagrammatic view of fibre extruding apparatus in accordance with this invention.

In embodiments of the present invention the following polyvinyl alcohol homopolymer compositions may be employed.

### Polymer composition A

| | |
|---|---|
| PVOH; degree of hydrolysis 98%; low viscosity | 35.97% |
| PVOH; degree of hydrolysis 89%; low viscosity | 35.97% |
| Trimethylol propane | 14.37% |
| Sodium benzoate | 0.21% |
| Glycerol | 4.29% |
| Water | 9.20% |

### Polymer composition B

| | |
|---|---|
| PVOH; degree of hydrolysis 99%; high viscosity | 7.193% |
| PVOH; degree of hydrolysis 98%; low viscosity | 64.737% |
| Trimethylol propane | 14.37% |
| Sodium benzoate | 0.21 |
| Glycerol | 4.29% |
| Water | 9.20% |

### Polymer composition C

| | |
|---|---|
| PVOH; degree of hydrolysis 98%; low viscosity | 35.87% |
| PVOH; degree of hydrolysis 89%; low viscosity | 35.87% |
| Di-pentaerythritol | 6.21% |
| Triacetin | 12.41% |
| Sodium benzoate | 0.25% |
| Water | 9.39% |

### Polymer composition D

| | |
|---|---|
| PVOH; degree of hydrolysis 98%; low viscosity | 22.61% |
| PVOH; degree of hydrolysis 97%; medium viscosity | 52.76% |
| Dipentaerythritol | 4.99% |
| Sodium benzoate | 0.25% |
| Triacetin | 10.00% |
| Water | 9.39% |

### Polymer composition E

| | |
|---|---|
| PVOH; degree of hydrolysis 98%; low viscosity | 25.20% |
| PVOH; degree of hydrolysis 98%; low viscosity | 5.20% |
| PVOH; degree of hydrolysis 89%; low viscosity | 25.21% |
| Dipentaerythritol | 5.00% |
| Triacetin | 10.00% |
| Water | 9.39% |

### Polymer composition F

| | |
|---|---|
| PVOH; degree of hydrolysis 98%; low viscosity | 27.33% |
| PVOH; degree of hydrolysis 98%; low viscosity | 27.33% |
| PVOH; degree of hydrolysis 89%; low viscosity | 27.33% |
| Dipentaerythritol | 8.00% |
| Methyl pentanediol | 5.50% |
| Glycerol | 4.50% |

### Polymer composition G

| | |
|---|---|
| PVOH; degree of hydrolysis 98%; low viscosity | 72.45% |
| PVOH; degree of hydrolysis 99%; high viscosity | 9.20% |
| Dipentaerythritol | 7.95% |
| Methyl pentanediol | 5.63% |
| Glycerol | 4.50% |
| Sodium benzoate | 0.27% |

Figure 1 illustrates apparatus for extrusion of polyvinyl alcohol fibres in accordance with the present invention. A feed hopper (1) supplies pellets of the polyvinyl alcohol composition to an extruder (2). The molten polymer is delivered from the extruder to a melt pump (3) which meters the polymer to a spin pack (4). The spin pack spins a fibre (10) through a quenching chamber (5) supplied with cooling air by a fan (11). A spin finish applicator (6) applies a coating to the fibre (10). The fibre is then delivered by roller (7) to a series of godet rollers (8) which produce drawn fibres. The fibres are then collected on a winder (9).

### Example 1

Multifilament polyvinyl alcohol fibres were extruded using the following parameters.

| Process Variable | Polymer G (3 dtex) | Polymer G (2dtex) |
|---|---|---|
| Extruder Zone 1 (°C) | 230 | 232 |
| Spin Pack (°C) | 238 | 247 |
| Throughput (kg/hr) | 1.39 | 1.39 |
| Die Head Pressure | 25 | 20 |
| Godet Speed 1 (rpm) | 391 | 585 |
| Godet Speed 5 (rpm) | 1110 | 1665 |
| Linear Density (dtex/ filament) | 3.08 | 2.06 |
| Tenacity (cN/dtex) | 3.29-3.70 | 3.28-4.12 |
| | | |

| Extruder Zone | Temperature (°C) | |
|---|---|---|
| Zone 1 | 225-232 | |
| Zone 2 | 233-237 | |
| Zone 3 | 235-242 | |
| Zone 4 | 240-247 | |
| Flange | 240-247 | |
| Die Head | 240-247 | |
| Metering Pump | 240-247 | |
| Spin Pack | 240-247 | |

The fibres were crimped using an IR heater temperature 220°C, speed 1.4 m/min, indented roller temperature 100°C and throughput rate 17g/h.

The results show that the formulation can be drawn to a higher ratio to form finer fibres with a thickness of 2 dtex. A greater melt strength was achieved.

The following properties were observed using polyvinyl alcohol (PVOH), lyocell and polylactic acid (PLA).

| Parameters | Carded/ needlepunched | | Carded/ hydroentangled | | Carded/ through air bonding | Carded/ chemical bonding |
|---|---|---|---|---|---|---|
| Compositions | 100% PVOH | 80:20 PVOH: Lyocell | 100% PVOH | 80:20 PVOH: Lyocell | 80:20 PVOH: PLA | PVOH & 17 wt% EVA |
| Areal density (g/m²) | 45 | 48 | 46 | 54 | 65 | 51 |
| Thickness (mm) | 0.9 | 1.5 | 0.7 | 1.5 | 2.1 | 0.7 |
| Dry tensile strength (N/25mm) | 2.1 | 7.3 | 1.8 | 7.2 | 5.0 | 42.9 |
| Wet tensile strength (N/25mm) | 3.6 | 8.4 | 1.6 | 4.1 | 2.9 | 11.6 |
| Dispersibility in the drainline | 14 | 10 | 2 | 5 | 4 | N/A |

The properties of airlaid hydroentangled polyvinyl alcohol (PVOH) webs were as follows.

| Parameters | Airlaid/Hydroentangled | | | | | |
|---|---|---|---|---|---|---|
| Composition | 100% PVOH | 80:20 PVOH: Lyocell | 50:50 PVOH: Lyocell | 20:80 PVOH: Lyocell | 80:20 PVOH: hemp | 50:50 PVOH: pulp |
| Areal density (g/m²) | 49 | 47 | 47 | 36 | 50 | 50 |
| Thickness (mm) | 0.7 | 0.7 | 0.8 | 0.7 | 0.8 | 0.7 |
| Dry tensile strength (N/25mm) | 3.2 | 2.01 | 1.8 | 20.9 | 1.8 | 17.1 |
| Wet tensile strength (N/25mm) | 2.0 | 1.5 | 1.8 | 0.5 | <0.1 | <0.1 |
| Dispersibility in the drainline (%) | 99 | 99 | 98 | 95 | 98 | 100 |
| Dispersibility in the sewer system (%) | 73 | 69 | 64 | 19 | 75 | 100 |

The properties of wetlaid hydroentangled PVOH webs were as follows.

| Parameters | Wetlaid/hydroentangled | | | | | |
|---|---|---|---|---|---|---|
| Composition | 100% PVOH | 80:20 PVOH: Lyocell | 50:50 PVOH: Lyocell | 20:80 PVOH: Lyocell | 80:20 PVOH: hemp | 50:50 PVOH: pulp |
| Areal density (g/m²) | 61 | 58 | 61 | 62 | 57 | 63 |
| Thickness (mm) | 0.9 | 0.9 | 0.8 | 1.6 | 1.1 | 1.0 |
| Dry tensile strength (N/25mm) | 3.9 | 4.8 | 16.4 | 15.0 | 12.4 | 12.0 |
| Wet tensile strength (N/25mm) | 3.1 | 3.5 | 5.2 | 1.4 | 4.4 | 3.1 |
| Dispersibility in the drainline (%) | 87 | 95 | 92 | 98 | 83 | 99 |
| Dispersibility in the sewer system (%) | 45 | 47 | 64 | 82 | 74 | 67 |

In further embodiments, the properties of wetlaid hydroentangled PVOH webs were as follows.

| Parameters | Wetlaid/ Hydroentangled | | |
|---|---|---|---|
| Composition | 50:30:20% PVOH: Pulp: Viscose | 40:40:20% PVOH: Pulp: Viscose | 20:60:20% PVOH: Pulp: Viscose |
| Areal density (g/m²) | 56 | 57 | 57 |
| Thickness (mm) | 0.83 | 0.92 | 1.10 |
| Dry tensile strength (N/25mm) | 13.93 | 12.35 | 13.05 |
| Wet tensile strength (N/25mm) | 6.38 | 4.36 | 2.56 |
| Dispersibility in the drainline (%) | 85 | 83 | 96 |
| Dispersibility in the sewer system (%) | 67 | 74 | 87 |

### Example 2

The tensile strength of webs comprising polyvinyl alcohol/pulp blends were compared with commercial flushable wipes.

The tensile strength was compared with lotion saturated wipes. The commercial wipes were squeezed by hand to remove excess lotion. The excess lotion was used to saturate the polyvinyl alcohol products of the present invention at a pick up of 200 to 300% wt%.

The wetlaid webs hydroentangled at high specific energy (30 bars x 2/bard x 4) exhibited higher wet tensile strength compared to the benchmark flushable wipes and the wetlaid webs hydroentangled at low specific energy (30 bars x 2 / 50 bars x 2). The increase in the specific energy had a positive impact on the wet tensile strength of the wetlaid hydroentangled fabrics with an increase of approximately 100-170%.

There was no significant differences in the wet strength between the 50:50 polyvinyl alcohol:Lyocell and 80:20 polyvinyl alcohol:Lyocell fabrics hydroentangled at the high specific energy (p>0.05).

### Example 3

The dispersibility in the drain line of polyvinyl alcohol/pulp blends was compared with commercial flushable wipes.

Tests were carried out to determine dispersibility in a sewer system. Commercial wipes showed low dispersibility with less than 60% passing a 5.6mm screen.

The polyvinyl alcohol wetlaid fabrics hydroentangled at low specific energy (30 bars x 2 / 50 bars x 2) showed relatively good dispersibility with > 70 %wt. passing the 5.6mm screen. The decrease in lyocell fibre length from 5mm to 3mm had a positive impact on dispersibility.

The dispersibility of the wetlaid hydroentangled fabrics decreased with increased specific energy (30 bars x 2 / 50 bards x 4). The fibres were more interlocked promoting fibre roping.

After the dispersibility test, the wetlaid webs hydroentangled at high specific energy showed fragments size < 4cm which is one of the alternative requirements to pass the dispersibility in the sewer system.

The polyvinyl alcohol fibres were successfully converted into wetlaid hydroentangled fabrics. The fabrics incorporating pulp fibres showed good dry and wet tensile strength and dispersibility, while the incorporation of lyocell fibres promoted the wet tensile strength but decreased the dispersibility of the hydroentangled wetlaid fabrics.

The commercial flushable wipes passed the dispersibility in the drainline test with more than 50 wt% passing through a 12.5mm screen.

The wetlaid hydroentangled polyvinyl alcohol-containing webs exhibited excellent results with more than 80 wt% passing through a 12.5 mm screen.

### Example 4

The hydroentangled wetlaid non-woven polyvinyl alcohol/pulp fabrics were compared with commercial flushable wipes.

The commercial flushable wipes showed low dispersibility with less than 60 wt% passing through a 5.6mm sieve. The hydroentangled wetlaid fabrics incorporating 20 wt% polyvinyl alcohol fibre and 80 wt% pulp exhibited excellent results with 90 wt% passing through a 5.6mm screen.

Webs comprising polyvinyl alcohol, pulp and viscose/lyocell exhibited better dispersibility performance in comparison to commercial flushable wipes.

Use of polyvinyl alcohol fibres in hydroentangled wetlaid fabrics incorporating pulp fibres improved the dry tensile strength. Incorporation of viscose or lyocell fibres improved the wet strength of the fabrics. A superior combination of wet strength and dispersibility performance was achieved using 40 wt% polyvinyl alcohol, 40 wt% pulp and 20 wt% viscose fibres.

## Claims

1. A method of manufacture of polyvinyl alcohol fibres comprising the steps of:
providing a polyvinyl alcohol composition comprising:
homopolymeric polyvinyl alcohol having a degree of hydrolysis of 88 wt% to 98 wt% or greater and a weight average molecular weight in the range from 14,000 to 35,000;
a plasticiser selected from the group consisting of: diglycerol, triglycerol, fructose, ribose, xylose, D-mannitol, triacetin, pentaerythritol, dipentaerythritol, methyl pentanediol, 1,2-propanediol, 1,4-butanediol, 2-hydroxy-1,3-propanediol, 3-methyl-1,3-butanediol, 3,3-dimethyl-1,2-butanediol, polyethylene glycol 300, polyethylene glycol 400, alkoxylated polyethylene glycol, caprolactam, tricyclic trimethylolpropane formal, rosin esters, erucamide, and mixtures thereof; and
an optional stabilizer selected from the group consisting of: sodium stearate, potassium oleate, sodium benzoate, calcium stearate, stearic acid, dimethyl pentane diol, propionic acid and mixtures thereof;
melting the composition at a temperature from 190°C to 250°C to form a molten polymer;
extruding the melted composition to form an extrudate;
forming the extrudate into molten fibres; and
allowing the molten fibres to solidify to form solid fibres.

2. A method as claimed in claim 1, wherein the degree of hydrolysis is 90 wt% to 98 wt%.

3. A method as claimed in claim 2, wherein the degree of hydrolysis is 95 wt% to 98 wt%.

4. A method as claimed in any preceding claim, wherein the melt flow index of the polyvinyl alcohol composition is in the range 30 to 80.

5. A method as claimed in any preceding claim, wherein the melt flow index of the polyvinyl alcohol composition is in the range 50 to 75.

6. A method as claimed in any preceding claim, wherein the melt flow index of the polyvinyl alcohol composition is in the range 70 to 75.

7. A method as claimed in any preceding claim, wherein the plasticiser is selected from two or more of the group consisting of: diglycerol, triglycerol, xylose, D-mannitol, triacetin, dipentaerythritol, 1,4-butanediol, 3,3-dimethyl-1,2-butanediol, and caprolactam.

8. A method as claimed in any of claims 1 to 7, wherein the polymer composition is a blend of two or more polyvinyl alcohol homopolymers having the same degree of hydrolysis and different molecular weights.

9. A polyvinyl alcohol fibre manufactured in accordance with any preceding claim.

10. A non-woven fibre product manufactured in accordance with the method of any of claims 1 to 8.

11. A non-woven fibre product as claimed in claim 10, wherein the product is a disposable wipe.

12. A non-woven fibre comprising homopolymeric polyvinyl alcohol having a degree of hydrolysis of 88 wt% or greater.

13. A non-woven fibre product comprising homopolymeric polyvinyl alcohol having a degree of hydrolysis of 88 wt% or greater.

14. A non-woven fibre product as claimed in claim 13, wherein the product is a disposable wipe.
